# EUROPEAN PATENT APPLICATION

(11) **EP 4 194 067 A1**
(43) Date of publication of application: **14.06.2023**
(21) Application number: 20948618.2
(22) Date of filing: 07.08.2020
(51) Int. Cl.: A63F 13/70

(54) **GAME ENGINE RESOURCE PROCESSING METHOD AND APPARATUS, AND ELECTRONIC DEVICE AND COMPUTER-READABLE STORAGE MEDIUM**

(71) Applicant: Xiamen Yaji Software Co., Ltd., Xiamen, Fujian 361021 (CN)
(72) Inventor: WANG, Hao, Xiamen, Fujian 361021 (CN); LING, Huabin, Xiamen, Fujian 361021 (CN); LIN, Shun, Xiamen, Fujian 361021 (CN)
(74) Representative: Ipsilon
(86) International application number: PCT/CN2020/107836
(87) International publication number: WO 2022/027600

(57) **Abstract**

The present disclosure provides a game engine resource processing method and apparatus, an electronic device and a computer readable storage medium. The game engine resource processing method includes: by a first preset interface of a game engine, receiving an obtaining request for any game resource of any operation platform (S 110); based on the obtaining request, obtaining any game resource by using a resource management system of the game engine, where the resource management system includes the first preset interface, resources, a resource manager, a resource loader and a resource registry (S 120); returning any obtained game resource (S130).

## Description

### TECHNICAL FIELD

The present disclosure relates to the field of data processing technologies, and in particular to a game engine resource processing method and apparatus, an electronic device and a computer readable storage medium.

### BACKGROUND

In recent years, along with continuously increasing demands of people for game entertainments and continuous development of game engine technologies, a variety of games come out. At present, along with development of software and hardware technologies and continuous increase of the market demands, the games are continuously increasing in scale, from the original eight-bit machines to the existing large-scene games with a storage space which usually reaches dozens of Gigabytes (GB), bringing a huge span. Furthermore, various software and hardware platforms supporting games are also on the increase, for example, the game platforms such as client games, smart phone games, web games and mini games etc. are on the increase. In addition, the technologies relating to game development also change day by day and various new graphic libraries, physics libraries, and audio libraries and etc used for development of various games also emerge. All of the above indicates large scale, large number and complex technologies of the current game industry.

In a game development process, a large number of words, images, sound effects, fonts, models, animations, grids and scripts etc. will be generated and used, and various different resources may derive various formats, each of which has a different performance on each of the game operation platforms. Further, with further development of the game industry, many companies proposed corresponding support and commercialization solutions for games, which causes various resource files to surge. However, the inventor of the present disclosure found in the specific implementation that in order to adapt to various game operation platforms and launch the games to each game operation platform, the game engines must be developed to be compatible with the sources of all game operation platforms, leading to the problems of excessive resources, and management chaos and difficulties in the research and development of the game engines. Further, the existing game resource management system has the problems of excessive code copies, architecture disorder, many defects, poor extendibility, poor flexibility and poor performance etc. Therefore, it is necessary to propose a new solution to ensure consistency of performances of a huge number of resources on different game operation platforms.

### SUMMARY

The object of the present disclosure aims to solve at least one of the technical defects as mentioned above by using the following technical solution.

According to a first aspect of the present disclosure, there is provided a game engine resource processing method, including:
by a first preset interface of a game engine, receiving an obtaining request for any game resource of any operation platform;
based on the obtaining request, obtaining any game resource by using a resource management system of the game engine, wherein the resource management system comprises the first preset interface, resources, a resource manager, a resource loader and a resource registry;
returning any obtained game resource.

Specifically, the resource manager is configured to cache existing game resources, perform game resource release and based on a game resource type, determine a game resource release policy;
the resource loader is configured to load various game resources based on a piped load pipeline;
the resource registry is configured to store relevant information of the game resources, which includes at least one of identifier information, a hash value, and conversion information from a resource path to an actual path.

Furthermore, the resource loader includes a load queue module, a cyclic reference detection module, a pipeline scheduling module, a load pipeline module, a resource dependence analyzing module and an error processing module;
the load queue module is configured to store each game resource item being loaded and/or a game resource item to be loaded;
the cyclic reference detection module is configured to detect whether a cyclic dependence is present in a dependence relationship between the game resources, and when the cyclic dependence is present, perform breaking processing on the cyclic dependence;
the pipeline scheduling module is configured to perform at least one of the followings: controlling splicing of each pipeline, controlling data inflow and data outflow between pipes, scheduling parallel processing of each pipe, and scheduling callback processing of each pipe;
the load pipeline module is configured to perform at least one of dynamic splicing, deletion, addition and shift of the pipelines;
the resource dependence analyzing module is configured to, after deserialization, analyze relevant resources relied on by the game sources and load the relevant resources obtained by analysis;
the error processing module is configured to record abnormal information in a loading process of the game resources and return the abnormal information.

Furthermore, the load pipeline module includes a resource identifier analyzing pipe, a resource MD5 analyzing pipe, a platform adaption pipe, a resource download pipe and a resource load pipe;
the resource identifier analyzing pipe is configured to convert the identifier information of the game resources into global unique identifier information of the game resources, and covert the global unique identifier information into an actual path of the game resources;
the resource MD5 analyzing pipe is configured to obtain a version path of the game resources by adding a hash value of the game resources to the actual path of the game resources;
the platform adaption pipe is configured to perform matching on corresponding application programming interfaces API based on different game operation platforms;
the resource download pipe is configured to, based on a type of the game resources, determine a corresponding downloader for downloading the game resources;
the resource load pipe is configured to, based on a type of the game resources, determine a corresponding loader for loading the game resources.

Furthermore, the resource manager includes a resource policy module, a resource obtaining module, a resource caching module and a resource releasing module;
where the resource policy module is configured to determine different management policies for different game resources;
the resource obtaining module is configured to determine whether a game resource is present by querying the resource caching module, and when a game resource is present, return the game resource, and when no game resource is present, perform loading for the game resource by using the resource loader;
the resource caching module is configured to cache all resources used in a game, such that public game resources are multiplexed;
the resource releasing module is configured to, based on user selection, determine to perform releasing on the game resources or on the relevant resources relied on by the game resources.

Furthermore, the resource registry includes a resource path processing module, a resource information module, a resource identifier mapping table module and a resource MD5 mapping table module;
the resource path processing module is configured to convert the global unique identifier information of the game resources into path information of the game resources;
the resource information module is configured to store at least one of the followings: types of the game resources, relative paths of the game resources, names of the game resources, identifier information of the game resources, and an identifier for indicating whether a game resource is a sub-resource;
the resource identifier mapping table module is configured to perform mapping on the identifier information of the game resources and the global unique identifier information of the game resources;
the resource MD5 mapping table module is configured to perform mapping on the global unique identifier information of the game resources and the hash values of the game sources so as to query for the version information of the game sources.

Furthermore, obtaining any game resource by using the resource management system includes:
at action *a*, invoking a second preset interface of the resource registry by the first preset interface, and querying for relevant information of any game resource in the resource registry to obtain the identifier information of any game resource;
at action *b*, based on the identifier information of any one game resource, invoking a third preset interface of the resource manager and obtaining any game resource by using the resource manager.

Furthermore, obtaining any game resource by using the resource manager includes:
querying the game resources cached in the resource caching module of the resource manager and determining whether any game resource is comprised in the cached game resources;
if any game resource is included, returning any game resource;
if no game resource is included, invoking a fourth preset interface of the resource loader by the resource manager, and loading any game resource by the resource loader.

Furthermore, loading any game resource by the resource loader includes:
determining whether the load queue module is loading any game resource;
when any game resource is being loaded, registering a corresponding callback function and returning any loaded game resource by the callback function;
when no game resource is being loaded, adding a resource item for loading any game resource to the load queue module and based on the resource item, performing loading on any game resource.

Furthermore, based on the resource item, performing loading on any game resource includes:
detecting, by the cyclic reference detection module, whether a cyclic dependence is present in the resource item;
when the cyclic dependence is present, performing breaking processing on the cyclic dependence and loading any game resource;
when no cyclic dependence is present, performing pipeline scheduling on the resource item by using the pipeline scheduling module, such that relevant data of any game resource flows into the scheduled pipeline, and based on the scheduled pipeline, loading any game resource by using the load pipeline module.

Furthermore, based on the scheduled pipeline, loading any game resource by using the load pipeline module includes:
invoking the second preset interface by the resource identifier analyzing pipe and converting the identifier information of any game resource into the actual path of any game resource;
invoking the second preset interface by the resource MD5 analyzing pipe, adding the hash value of any game resource to the actual path and obtaining the version path of any game resource;
based on the version path, determining, by the platform adaption pipe, an API adapting to any operation platform;
based on the API, in combination with the type of any game resource, determining a downloader for downloading any game resource by the resource download pipe, and downloading any game resource by using the downloader;
based on the API, in combination with the type of any game resource, determining a loader for loading any game resource by the resource download pipe, and loading any game resource by using the loader.

Furthermore, after loading any game resource by using the load pipeline module based on the scheduled pipeline, the method further includes:
analyzing, by the resource dependence analyzing module, a relevant resource relied on by any game resource, and based on a analysis result, determining whether a dependence is present in any game resource;
if the dependence is present, cyclically performing the action *b*;
if no dependence is present, invoking the third preset interface of the resource manager, and determining a management policy of any game resource by using the resource policy module of the resource manager, and at the same time, caching any game resource by using the resource caching module of the resource manager such that any game resource is returned.

According to a second aspect of the present disclosure, there is provided a game engine resource processing apparatus, including:
a receiving module, configured to receive, through a first preset interface of a game engine, an obtaining request for any game resource of any operation platform;
an obtaining module, configured to, based on the obtaining request, obtain any game resource by using a resource management system of the game engine, where the resource management system includes at least one of the first preset interface, resources, a resource manager, a resource loader and a resource registry;
a returning module, configure to return any obtained game resource.

Specifically, the resource manager is configured to cache existing game resources, perform game resource release and based on a game resource type, determine a game resource release policy;
the resource loader is configured to load various game resources based on a piped load pipeline;
the resource registry is configured to store relevant information of the game resources, which includes at least one of identifier information, a hash value, conversion information from a resource path to an actual path.

Furthermore, the resource loader includes a load queue module, a cyclic reference detection module, a pipeline scheduling module, a load pipeline module, a resource dependence analyzing module and an error processing module;
the load queue module is configured to store each game resource item being loaded and/or a game resource item to be loaded;
the cyclic reference detection module is configured to detect whether a cyclic dependence is present in a dependence relationship between the game resources, and when the cyclic dependence is present, perform breaking processing on the cyclic dependence;
the pipeline scheduling module is configured to perform at least one of the followings: controlling splicing of each pipeline, controlling data inflow and data outflow between pipes, scheduling parallel processing of each pipe, and scheduling callback processing of each pipe;
the load pipeline module is configured to perform at least one of dynamic splicing, deletion, addition and shift of the pipelines;
the resource dependence analyzing module is configured to, after deserialization, analyze relevant resources relied on by the game sources and load the relevant resources obtained by analysis;
the error processing module is configured to record abnormal information in a loading process of the game resources and return the abnormal information.

Furthermore, the load pipeline module includes a resource identifier analyzing pipe, a resource MD5 analyzing pipe, a platform adaption pipe, a resource download pipe and a resource load pipe;
the resource identifier analyzing pipe is configured to convert the identifier information of the game resources into global unique identifier information of the game resources, and covert the global unique identifier information into an actual path of the game resources;
the resource MD5 analyzing pipe is configured to obtain a version path of the game resources by adding a hash value of the game resources to the actual path of the game resources;
the platform adaption pipe is configured to perform matching on corresponding application programming interfaces API based on different game operation platforms;
the resource download pipe is configured to, based on a type of the game resources, determine a corresponding downloader for downloading the game resources;
the resource load pipe is configured to, based on a type of the game resources, determine a corresponding loader for loading the game resources.

Furthermore, the resource manager includes a resource policy module, a resource obtaining module, a resource caching module and a resource releasing module;
wherein the resource policy module is configured to determine different management policies for different game resources;
the resource obtaining module is configured to determine whether a game resource is present by querying the resource caching module, and when a game resource is present, return the game resource, and when no game resource is present, perform loading for the game resource by using the resource loader;
the resource caching module is configured to cache all resources used in a game, such that public game resources are multiplexed.
the resource releasing module is configured to, based on user selection, determine to perform releasing on the game resources or on the relevant resources relied on by the game resources.

Furthermore, the resource registry includes a resource path processing module, a resource information module, a resource identifier mapping table module and a resource MD5 mapping table module;
the resource path processing module is configured to convert the global unique identifier information of the game resources into path information of the game resources;
the resource information module is configured to store at least one of the followings: types of the game resources, relative paths of the game resources, names of the game resources, identifier information of the game resources, and an identifier for indicating whether a game resource is a sub-resource;
the resource identifier mapping table module is configured to perform mapping on the identifier information of the game resources and the global unique identifier information of the game resources;
the resource MD5 mapping table module is configured to perform mapping on the global unique identifier information of the game resources and the hash values of the game sources so as to query for the version information of the game sources.

Furthermore, the obtaining module includes a first processing sub-module and a second processing sub-module;
the first processing sub-module is configured to invoke a second preset interface of the resource registry by the first preset interface and query for relevant information of any game resource in the resource registry to obtain the identifier information of any game resource;
the second processing sub-module is configured to, based on the identifier information of any one game resource, invoke a third preset interface of the resource manager and obtain any game resource by using the resource manager.

Furthermore, the second processing sub-module includes a querying unit and a first result processing unit;
the querying unit is configured to query the game resources cached in the resource caching module of the resource manager, and determine whether any game resource is included in the cached game resources;
the first result processing unit is configured to, if any game resource is included, return any game resource; if no game resource is included, invoke a fourth preset interface of the resource loader by the resource manager, and load any game resource by the resource loader.

Furthermore, the first result processing unit is specifically configured to: determine whether the load queue module is loading any game resource; if any game resource is being loaded, register a corresponding callback function and return any loaded game resource by the callback function; if no game resource is being loaded, add a resource item for loading any game resource to the load queue module and based on the resource item, perform loading on any game resource.

Furthermore, the first result processing unit is specifically configured to: detect, by the cyclic reference detection module, whether a cyclic dependence is present in the resource item; if the cyclic dependence is present, perform breaking processing on the cyclic dependence and load any game resource; if no cyclic dependence is present, perform pipeline scheduling on the resource item by using the pipeline scheduling module, such that relevant data of any game resource flows into the scheduled pipeline, and based on the scheduled pipeline, load any game resource by using the load pipeline module.

Furthermore, the first result processing unit is specifically configured to: invoke the second preset interface by the resource identifier analyzing pipe to convert the identifier information of any game resource into the actual path of any game resource; invoke the second preset interface by the resource MD5 analyzing pipe to add the hash value of any game resource to the actual path to obtain the version path of any game resource; based on the version path, determine, by the platform adaption pipe, an API adapting to any operation platform; based on the API, in combination with the type of any game resource, determine a downloader for downloading any game resource by the resource download pipe, and download any game resource by using the downloader; based on the API, in combination with the type of any game resource, determine a loader for loading any game resource by the resource download pipe, and load any game resource by using the loader.

Furthermore, the second processing sub-module further includes a second result processing unit.

The second result processing unit is configured to: analyze, by the resource dependence analyzing module, a relevant resource relied on by any game resource, and based on a analysis result, determine whether a dependence is present in any game resource; if the dependence is present, cyclically perform the operations of the second processing sub-module; if no dependence is present, invoke the third preset interface of the resource manager, and determine a management policy of any game resource by using the resource policy module of the resource manager, and at the same time, cache any game resource by using the resource caching module of the resource manager such that any game resource is returned.

According to a third aspect of the present disclosure, there is provided an electronic device, including a memory, a processor and a computer program stored in the memory and run on the processor, where the program is executed by the processor to perform the above game engine resource processing method.

According to a fourth aspect of the present disclosure, there is provided a computer readable storage medium, storing a computer program, where the program is executed by a processor to perform the above game engine resource processing method.

The additional aspect and advantages of the present disclosure will be partially given in the following descriptions, which will become apparent from the following descriptions or be understood by practice of the present disclosure.

### BRIEF DESCRIPTION OF THE DRAWINGS

The above and/or additional aspects and advantages of the present disclosure will be become apparent and easily intelligible in combination with the descriptions of the embodiments.
FIG. 1 is a flowchart illustrating a game engine resource processing method according to an embodiment of the present disclosure.
FIG. 2 is a schematic diagram illustrating a system architecture of a game engine according to an embodiment of the present disclosure.
FIG. 3 is a structural schematic diagram illustrating a resource management system of a game engine according to an embodiment of the present disclosure.
FIG. 4 is a schematic diagram illustrating a basic process of obtaining a game resource according to an embodiment of the present disclosure.
FIG. 5 is a schematic diagram illustrating a basic structure of a game engine resource processing apparatus according to an embodiment of the present disclosure.
FIG. 6 is a schematic diagram illustrating a detailed structure of a game engine resource processing apparatus according to an embodiment of the present disclosure.
FIG. 7 is a structural schematic diagram illustrating an electronic device according to an embodiment of the present disclosure.

### DETAILED DESCRIPTION OF THE EMBODIMENTS

The embodiments of the present disclosure are described in details with illustrations shown in the accompanying drawings, where same or similar numerals represent same or similar elements or elements having same or similar function throughout the specification. The embodiments described by referring to the accompanying drawings are illustrative and are used only to explain the present disclosure rather than limit the present disclosure.

Those skilled in the art should understand that the terms "one" "a", "the", and "said" in singular form also include plurality unless otherwise clearly stated. It should be further understood that, the term "comprise" used in the specification of the present disclosure refers to presence of the features, integers, steps, operations, elements and/or components, but does not preclude presence or addition of one or more other features, integers, steps, operations, elements, components and/or combinations thereof. It should be understood that, when it is called that an element is connected or coupled to another element, such element can be directly connected or coupled to the another element, or an intermediate element is present. Furthermore, the terms "connect" or "couple" used herein may include wireless connection or wireless coupling. The term "and/or" used herein includes any single or all combinations of one or more associated listed items.

In order to make the objects, technical solutions and advantages of the present disclosure clearer, the embodiments of the present disclosure will be further set forth in combination with the drawings.

The technical solutions of the present disclosure and the manners of solving the above technical problems by the technical solutions will be detailed below with specific embodiments. The several specific embodiments below can be mutually combined, and same or similar concepts or processes may not be repeated in some embodiments. The embodiments of the present disclosure will be described below in combination with the drawings.

### Embodiment 1

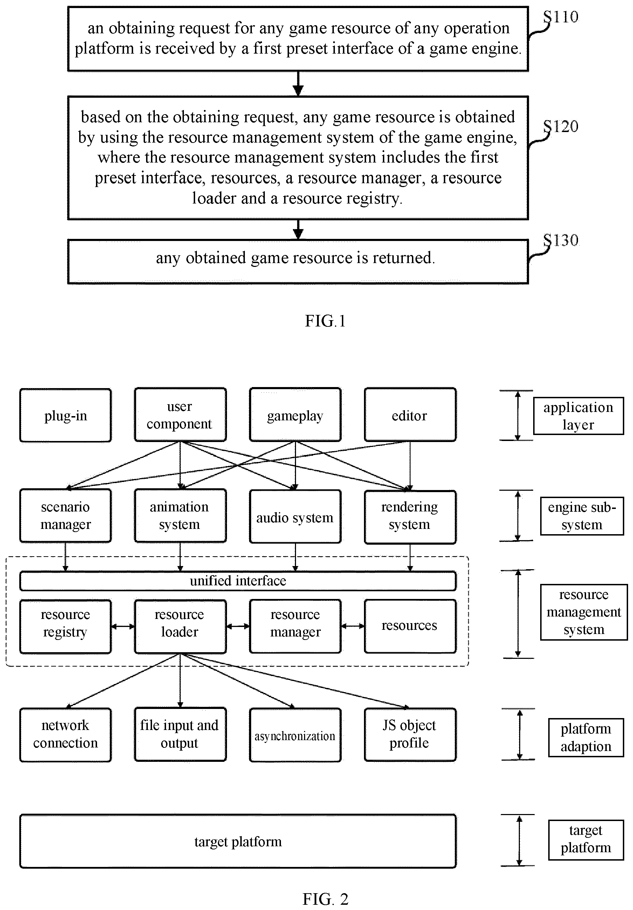

An embodiment of the present disclosure provides a game engine resource processing method. As shown in FIG. 1, the method includes the following steps.

At step S110, an obtaining request for any game resource of any operation platform is received by a first preset interface of a game engine.

Specifically, when an upper-level application layer and engine sub-systems of the game engine originate an obtaining request for any game resource of any operation platform, a terminal device may receive the obtaining request through the first preset interface of the game engine, where the first preset interface is a unified interface of a resource management system of the game engine. The terminal device may be a smart phone, an iPad, a table computer, and a laptop computer etc.

The application layer of the game engine includes a plug-in, a user component, a gameplay and an editor etc. The engine sub-systems of the game engine include a scenario manager, an animation system, an audio system and a rendering system etc, as shown in FIG. 2.

At step S120, based on the obtaining request, any game resource is obtained by using the resource management system of the game engine, where the resource management system includes the first preset interface, resources, a resource manager, a resource loader and a resource registry.

Specifically, after receiving the obtaining request, the first preset interface of the resource management system of the game engine may obtain any game resource based on the obtaining request. The resource management system includes the first preset interface, resources, a resource manager, a resource loader and a resource registry. In other words, module split is performed on the resource management system such that it includes the upper-level unified interface (i.e. the first preset interface), the resource manager, the resource loader and the resource registry etc. as shown in FIG. 2. The resource management system may be adapted to different game operation platforms such as iOS (apple operating system), Android (Android operating system) and Windows (Microsoft operating system) etc. by the resource loader, and obtain corresponding game resources therefrom, such that the upper-level application layer and engine sub-systems of the game engine can obtain the game resources of different game operation platforms by the first preset interface of the resource manager.

Furthermore, as shown in FIG. 2, in addition to the application layer, the engine sub-systems, and the resource management system, the system architecture of the game engine further includes a platform adaption pipe and a target operation platform. In the entire game engine, the resource management system is located at the bottom layer of the game engine and is the basis of each sub-system and the application layer of the game engine.

At step S130, any obtained game resource is returned.

Specifically, the resource management system may, after obtaining any game resource, return any obtained game resource to the upper-level of the game engine.

Compared with prior arts, in the game engine resource processing method provided by the embodiment of the present disclosure, an obtaining request for any game resource of any operation platform is received through the first preset interface of the resource management system of the game engine, and any game resource is obtained by the resource management system based on the obtaining request; the resource management system includes the first preset interface, resources, a resource manager, a resource loader and a resource registry. Thus, the resource management system may be adapted to different game operation platforms such as iOS (apple operating system), Android (Android operating system) and Windows (Microsoft operating system) etc. by the resource loader, and obtain corresponding game resources therefrom, such that the upper-level application layer and engine sub-systems of the game engine can obtain the game development resources of different game operation platforms by the first preset interface of the resource manager. In this way, efficient and flexible management on different formats of resources of various game operation platforms can be achieved, and the requirements for extendibility of the resource management system and the requirements for quickly loading lots of resources of different game operation platforms can be satisfied.

The embodiment of the present disclosure provides another possible implementation as described below.

The resource manager is configured to cache existing game resources, perform game resource release and based on a game resource type, determine a game resource release policy. By caching the existing game resources, it can be guaranteed that the game resources will not be repeatedly loaded.

The resource loader is configured to load various game resources based on a piped load pipeline, that is, the resource loader is designed based on piping such that the piped load pipeline can support quick extension and adapt to various requirements.

The resource registry is configured to store relevant information of the game resources, which includes at least one of identifier information, a hash value, and conversion information from a resource path to an actual path. Further, the resource registry may further provide an external interface for querying for the relevant information of the game resources.

The first preset interface of the resource management system is a unified interface that the resource management system provides to the upper level for being invoked by various parts of the game engine, including interfaces for obtaining, querying, loading and releaser etc. of a series of game resources.

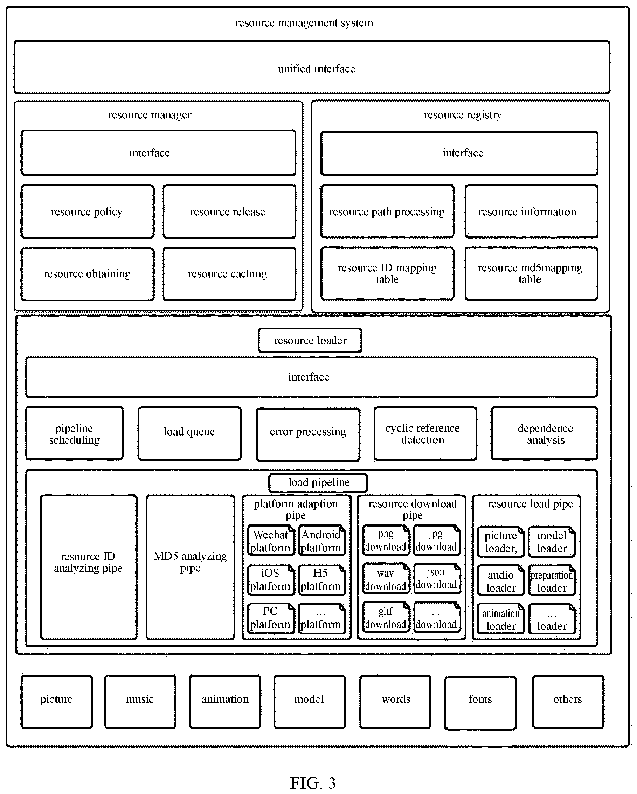

Specifically, as shown in FIG. 3, the piped resource loader includes a load queue module, a cyclic reference detection module, a pipeline scheduling module, a load pipeline module, a resource dependence analyzing module and an error processing module. The detailed contents and functions of each module will be described below.

The load queue module is configured to store each game resource item being loaded and/or a game resource item to be loaded, so as to control the work such as dependence between the game resource items.

The cyclic reference detection module is configured to detect whether a cyclic dependence is present in a dependence relationship between the game resources, and when the cyclic dependence is present, perform breaking processing on the cyclic dependence. Equivalently, whether a loop is present in the dependence relationship between the game resources is detected; if a loop is present, loop breaking processing must be performed to avoid deadlocking.

The cyclic dependence is a cyclic reciprocating dependence, for example, A depends on B, B depends on C and C depends on A. In this way, the dependence relationship forms one loop, namely, A->B->C->A. The cyclic dependence will result in the following case: when A is loaded, B must be loaded firstly; when B is loaded, C must be loaded firstly; when C is loaded, A must be loaded firstly. In this case, loading will never be completed, forming an infinite loop. The above loop problem is referred to the cyclic dependence.

Since the cyclic dependence leads to an infinite loop, it is necessary to find a position in the loop of the dependence relationship to break it. For example, the above A->B->C->A is one loop. At this time, it is required to break the dependence relationship in which B depends on C so as to change the loop into A->B and C->A. In this case, loading will be stopped after B is loaded and thus the loop (i.e. the cyclic dependence) is broken. The manner in which the cyclic dependence is broken is as follows: when one sub-resource is loaded, it is firstly determined whether the sub-resource is its own ancestor resource; if yes, it means that a cyclic dependence is present, and thus the sub-resource will be no longer loaded but a current resource is directly loaded.

The pipeline scheduling module is configured to: control splicing of each pipeline, control data inflow and data outflow between pipes, schedule parallel processing of each pipe, and schedule callback processing of each pipe and the like.

The load pipeline module is configured to perform at least one of dynamic splicing, deletion, addition and shift of the pipelines. Since the entire load pipeline is based on piped design, operations such as dynamic splicing, deletion, addition and shift etc. can be performed on the pipes therein, so as to achieve the custom function of the user.

The resource dependence analyzing module is configured to, after deserialization, analyze relevant resources relied on by the game sources and load the relevant resources obtained by analysis. That is, other resources relied on by the game resources are analyzed out and then loaded.

Deserialization and serialization are two relative concepts. Serialization may refer to that a state of a running object is stored in a close and orderly form and may be stored in any medium capable of storing data, such as database and hard disk drive etc. The deserialization may refer to that the data files stored by the above serialization are read and then analyzed and restored to the running state of that time.

The error processing module is configured to: record abnormal information in a loading process of the game resources and return the abnormal information. That is, whether an anomaly occurs to the resource loading process is detected, and the anomaly is recorded upon its occurrence and meanwhile, the anomaly is returned during callback.

Furthermore, as shown in FIG. 3, the load pipeline module includes a resource identifier analyzing pipe, a resource MD5 analyzing pipe, a platform adaption pipe, a resource download pipe and a resource load pipe. The detailed contents and functions of each pipe will be described below.

The resource identifier analyzing pipe is configured to convert the identifier information (e.g. ID) of the game resources into global unique identifier information of the game resources, and covert the global unique identifier information into an actual path (e.g. a true path address) of the game resources.

The resource MD5 analyzing pipe is configured to obtain a version path of the game resources by adding a hash value of the game resources to the actual path of the game resources.

The platform adaption pipe is configured to perform matching on corresponding application programming interfaces API based on different game operation platforms, that is, adaption to the corresponding API is performed based on different game operation platforms.

The resource download pipe is configured to, based on a type of the game resources, determine a corresponding downloader for downloading the game resources, that is, based on the type of the game resources, a corresponding downloader is selected to download the resources.

The resource load pipe is configured to, based on a type of the game resources, determine a corresponding loader for loading the game resources, that is, based on the type of the game resources, a corresponding loader is selected to perform resource loading, including operations such as resource analysis, and deserialization etc.

It is noted that the above resource loader carries out piped designing on the load flow, such that each pipe is in charge of one service and no direct service relationship between pipes is present and the pipes are series-connected to form one load pipeline. When any resource request enters the pipeline, it can be converted into a corresponding resource. The adaption of each game operation platform and processing of multiple game resource formats are performed in multiple different pipes, so as to avoid mutual interference. Further, the logic is clearer and more consistent with the object-oriented design idea, which greatly reduces the difficulties of development and maintenance and increases the working efficiency. Each pipe can be hot-pluggable and sequence-modifiable. The user may add, delete and modify each pipe based on specific requirements. Thus, the flexibility of the game development is increased to a large extent. In addition, in the predictable future, adaption to the standard can be performed by performing addition, deletion and modification on the pipes, such that the extendibility of the resource management system can be significantly improved. Further, due to non-correlation of the work of the pipes, parallel processing can be performed by using a manufacturer and consumer model, so as to greatly increase the parallel processing efficiency and reduce the resource loading time.

The above new standard may refer to a new graphics library, or a new version of the existing graphics library, OpenGL, direct, Vulkan, or new JavaScript standard, ES7 or the like, or new game platforms such as WeChat mini game, Baidu mini game or the like.

An embodiment of the present disclosure provides another possible implementation. As shown in FIG. 3, the resource manager of the resource management system may also be divided into a plurality of sub-modules, each of which has been detailed below in terms of their contents and functions.

The resource policy module is configured to determine different management policies for different game resources, that is, different resources are managed based on different policies. For example, the internal resources of the engine and the resources which are under the resource path and are to be used for long by the user are controlled manually without requiring the engine to perform release. Those ordinary resources are controlled based on the settings of the corresponding scenario. If the scenario is set to be automatic resource release, the corresponding resources will be determined during scenario switching based on whether such resources will be still used in a next scenario. If these resources will not be used any longer, the resources will be automatically released during scenario switching.

The resource obtaining module is configured to determine whether a game resource is present by querying the resource catching module, and when the game resource is present, return the game resource, and when no game resource is present, load the game resource by using the resource loader.

The resource caching module is configured to cache all resources used in a game such that the public game resources can be multiplexed. Further, it can be guaranteed that the game resources will not be repeatedly loaded.

The resource releasing module is configured to, based on user selection, determine to perform release on the game resources or on relevant resources relied on by the game resources, that is, whether the game resources themselves or all other resources relied on by the game resources are released based on user selection. All relevant resources are analyzed and the object is removed from the cache.

In addition, as shown in FIG. 3, the resource registry in the resource management system may also be divided into a plurality of sub-modules, each of which will be detailed below in terms of their contents and functions.

The resource path processing module is configured to convert the global unique identifier information of the game resources into path information of the game resources.

The resource information module is configured to store at least one of the followings: types of the game resources, relative paths of the game resources, names of the game resources, identifier information of the game resources, and an identifier for indicating whether a game resource is a sub-resource;

The resource identifier mapping table module is configured to perform mapping on the identifier information of the game resources and the global unique identifier information of the game resources.

The resource MD5 mapping table module is configured to perform mapping on the global unique identifier information of the game resources and the hash values of the game sources so as to query for the version information of the game sources.

An embodiment of the present disclosure provides another possible implementation. The step S120 of obtaining any game resource by the resource management system specifically includes: at action *a*, invoking a second preset interface of the resource registry by the first preset interface, and querying for relevant information of any game resource in the resource registry to obtain identifier information of any game resource; at action *b*, based on the identifier information of any game resource, invoking a third preset interface of the resource manager and obtaining any game resource by the resource manager.

Specifically, obtaining any game source by the resource manager includes:
querying the game resources cached in the resource caching module of the resource manager and determining whether any game resource is included in the cached game resources;
if any game resource is included, returning any game resource;
if no game resource is included, invoking a fourth preset interface of the resource loader by the resource manager, and loading any game resource by the resource loader.

Specifically, loading any game resource by the resource loader includes:
determining whether the load queue module is loading any game resource;
when any game resource is being loaded, registering a corresponding callback function and returning any loaded game resource by the callback function;
when no game resource is being loaded, adding a resource item for loading any game resource to the load queue module and based on the resource item, performing loading on any game resource.

Specifically, based on the resource item, performing loading on any game resource includes:
detecting, by the cyclic reference detection module, whether a cyclic dependence is present in the resource item;
when the cyclic dependence is present, performing breaking processing on the cyclic dependence and loading any game resource;
when no cyclic dependence is present, performing pipeline scheduling on the resource item by using the pipeline scheduling module, such that relevant data of any game resource flows into the scheduled pipeline, and based on the scheduled pipeline, loading any game resource by using the load pipeline module.

Specifically, based on the scheduled pipeline, loading any game resource by using the load pipeline module includes:
invoking the second preset interface by the resource identifier analyzing pipe and converting the identifier information of any game resource into the actual path of any game resource;
invoking the second preset interface by the resource MD5 analyzing pipe, adding the hash value of any game resource to the actual path and obtaining the version path of any game resource;
based on the version path, determining, by the platform adaption pipe, an API adapting to any operation platform;
based on the API, in combination with the type of any game resource, determining a downloader for downloading any game resource by the resource download pipe, and downloading any game resource by using the downloader;
based on the API, in combination with the type of any game resource, determining a loader for loading any game resource by the resource download pipe, and loading any game resource by using the loader.

Specifically, after loading any game resource by using the load pipeline module based on the scheduled pipeline, the method further includes:
analyzing, by the resource dependence analyzing module, a relevant resource relied on by any game resource, and based on a analysis result, determining whether a dependence is present in any game resource;
if the dependence is present, cyclically performing the action *b*;
if no dependence is present, invoking the third preset interface of the resource manager, and determining a management policy of any game resource by using the resource policy module of the resource manager, and at the same time, caching any game resource by using the resource caching module of the resource manager such that any game resource is returned.

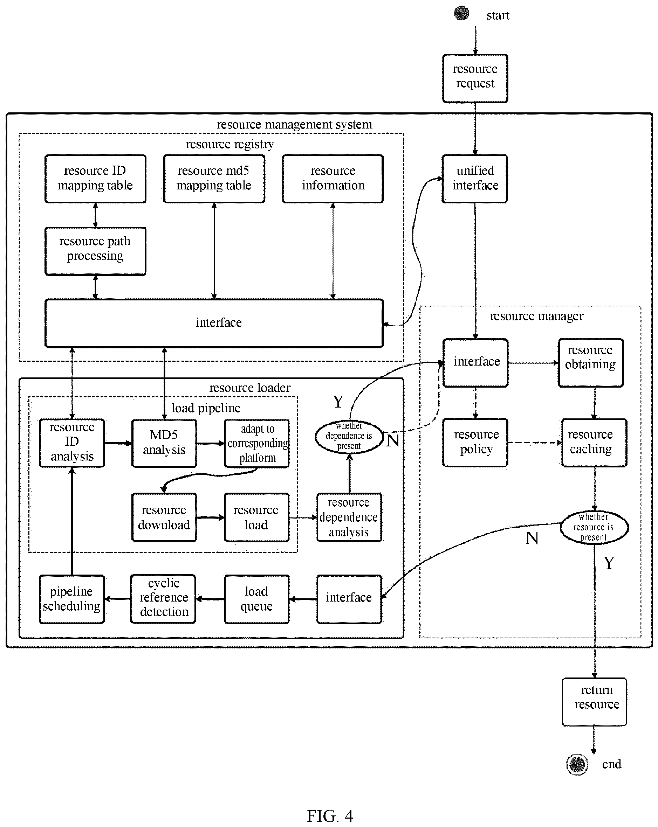

FIG. 4 shows a basic process in which any game resource is obtained by the resource management system in this implementation. The basic process includes the following several sub-processes.
1. The high-level of the game engine (e.g. the application layer and the engine sub-systems) originates an obtaining request for any game resource of any operation platform, and correspondingly, the first preset interface (i.e. the unified interface in FIG. 4) of the resource management system of the game engine receives the obtaining request.
2. The second preset interface (i.e. the interface of the resource registry in FIG. 4) of the resource registry is invoked by the first preset interface, and relevant information of any game resource is queried for in the resource registry to obtain the identifier information (e.g. ID) of any game resource; meanwhile, based on the identifier information of any game resource, the third preset interface (i.e. the interface of the resource manager in FIG. 4) of the resource manager is invoked and any game resource is obtained by the resource manager.
3. The interface of the resource manager invokes the resource obtaining module to obtain any game resource desired by a user.
4. The resource obtaining module determines whether any game resource is present in the resource caching module by querying for any game resource in the resource caching module; and if any game resource is present in the resource caching module, directly returns any game resource; and if any game resource is not present in the resource caching module, invokes a fourth preset interface of the resource loader (i.e. the interface of the resource loader in FIG. 4) and loads any game resource by the resource loader.
5. The interface of the resource manager determines whether any game resource is being loaded in the load queue module; if any game resource is being loaded, registers a callback function to return any loaded game resource by the callback function; or, adds a resource item for loading any game resource to the load queue module, and based on the resource item, loads any game resource.
6. Cyclic dependence detection is performed on the resource item by the cyclic reference detection module; if a cyclic dependence is present, the resource item will be directly completed to perform breaking on the loop of the cyclic dependence, or loading of any game resource is continued.
7. Pipeline scheduling is performed on the resource item by the pipeline scheduling module such that relevant data of any game resource flows into the scheduled pipeline.
8. The interface of the resource registry is invoked by the resource identifier analyzing pipe to convert the identifier information of any game resource into the actual path of any game resource.
9. The interface of the resource registry is invoked by the resource MD5 analyzing pipe to add the version hash value of any game resource to the actual path of any game resource to obtain the version path of any game resource.
10. Based on different game operation platforms, adaption of the API of the game operation platform of any game resource is performed by the platform adaption pipe.
11. Based on the type or format of any game resource, the resource downloader is selected to download any game resource.
12. Based on the type or format of any game resource, the resource loader is selected to load any game resource.
13. The dependence of any game resource is analyzed by the resource dependence analyzing module, that is, the relevant resource of any game resource is analyzed.
14. Based on the analysis result, whether a dependence is present in any game resource; if the dependence is present, step 3 is repeated or the step 15 below is performed.
15. The interface of the resource manager is invoked, and the resource management policy is set by the resource policy module of the resource manager.
16. Any game resource is cached by the resource caching module of the resource manager.

Any game resource is returned.

In the game engine resource processing method of the embodiments of the present disclosure, flows of module split, pipe abstraction, platform format adaption and parallel resource loading are performed on the resource management system, and links in the loading process are extracted to form separate pipes which are combined to form a load pipeline in which the pipes perform parallel working. The pipes can be freely combined and extended to adapt to multiple game operation platforms, and multi-format adaption can be performed in a separate pipe. Further, the loaded resources are cached for later resource multiplexing. Thus, efficient and flexible management on different formats of resources of various game operation platforms can be achieved, and the requirements for extendability of the resource management system and the requirements for quickly loading lots of resources of different game operation platforms can be satisfied.

### Embodiment 2

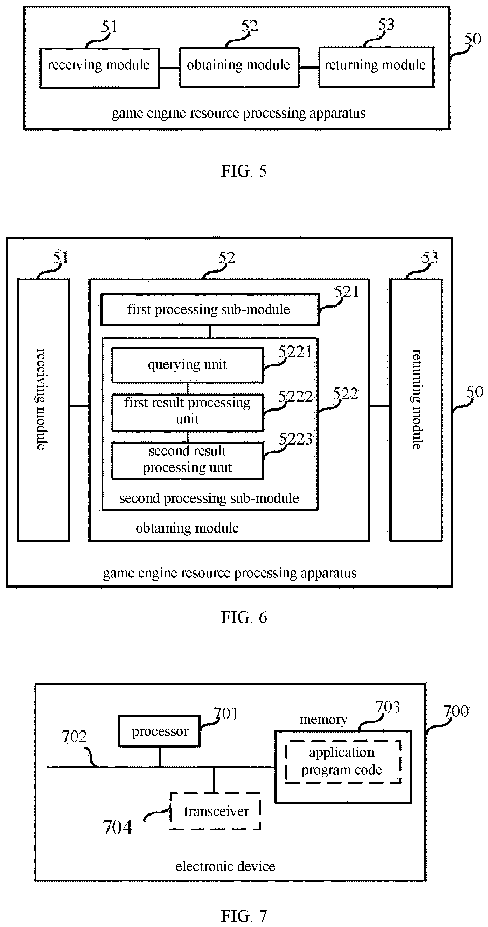

FIG. 5 is a structural schematic diagram illustrating a game engine resource processing apparatus according to an embodiment of the present disclosure. As shown in FIG. 5, the apparatus 50 may include a receiving module 51, an obtaining module 52 and a returning module 53.

The receiving module 51 is configured to, by a first preset interface of a game engine, receive an obtaining request for any game resource of any operation platform.

The obtaining module 52 is configured to, based on the obtaining request, obtain any game resource by a resource management system of the game engine, where the resource management system includes the first preset interface, resources, a resource manager, a resource loader and a resource registry.

The returning module 53 is configured to return any obtained game resource.

Specifically, the resource manager is configured to cache existing game resources, perform game resource release and based on a game resource type, determine a game resource release policy.

The resource loader is configured to load various game resources based on a piped load pipeline.

The resource registry is configured to store relevant information of the game resources, which includes at least one of identifier information, a hash value, and conversion information from a resource path to an actual path.

Furthermore, the resource loader includes a load queue module, a cyclic reference detection module, a pipeline scheduling module, a load pipeline module, a resource dependence analyzing module and an error processing module.

The load queue module is configured to store each game resource item being loaded and/or a game resource item to be loaded.

The cyclic reference detection module is configured to detect whether a cyclic dependence is present in a dependence relationship between the game resources, and when the cyclic dependence is present, perform breaking processing on the cyclic dependence.

The pipeline scheduling module is configured to perform at least one of the followings: controlling splicing of each pipeline, controlling data inflow and data outflow between pipes, scheduling parallel processing of each pipe, and scheduling callback processing of each pipe.

The load pipeline module is configured to perform at least one of dynamic splicing, deletion, addition and shift of the pipelines.

The resource dependence analyzing module is configured to, after deserialization, analyze relevant resources relied on by the game sources and load the relevant resources obtained by analysis.

The error processing module is configured to record abnormal information in a loading process of the game resources and return the abnormal information.

Furthermore, the load pipeline module includes a resource identifier analyzing pipe, a resource MD5 analyzing pipe, a platform adaption pipe, a resource download pipe and a resource load pipe.

The resource identifier analyzing pipe is configured to convert the identifier information of the game resources into global unique identifier information of the game resources, and covert the global unique identifier information into an actual path of the game resources.

The resource MD5 analyzing pipe is configured to obtain a version path of the game resources by adding a hash value of the game resources to the actual path of the game resources.

The platform adaption pipe is configured to perform matching on corresponding application programming interfaces API based on different game operation platforms.

The resource download pipe is configured to, based on a type of the game resources, determine a corresponding downloader for downloading the game resources.

The resource load pipe is configured to, based on a type of the game resources, determine a corresponding loader for loading the game resources.

Furthermore, the resource manager includes a resource policy module, a resource obtaining module, a resource caching module and a resource releasing module.

The resource policy module is configured to determine different management policies for different game resources.

The resource obtaining module is configured to determine whether a game resource is present by querying the resource caching module, and when a game resource is present, return the game resource, and when no game resource is present, perform loading for the game resource by using the resource loader.

The resource caching module is configured to cache all resources used in a game such that the public game resources can be multiplexed.

The resource releasing module is configured to, based on user selection, determine to perform releasing on the game resources or on the relevant resources relied on by the game resources.

Furthermore, the resource registry includes a resource path processing module, a resource information module, a resource identifier mapping table module and a resource MD5 mapping table module.

The resource path processing module is configured to convert the global unique identifier information of the game resources into path information of the game resources.

The resource information module is configured to store at least one of the followings: types of the game resources, relative paths of the game resources, names of the game resources, identifier information of the game resources, and an identifier for indicating whether a game resource is a sub-resource.

The resource identifier mapping table module is configured to perform mapping on the identifier information of the game resources and the global unique identifier information of the game resources.

The resource MD5 mapping table module is configured to perform mapping on the global unique identifier information of the game resources and the hash values of the game sources so as to query for the version information of the game sources.

Furthermore, the obtaining module 52 includes a first processing sub-module 521 and a second processing sub-module 522 as shown in FIG. 6.

The first processing sub-module 521 is configured to invoke a second preset interface of the resource registry by the first preset interface and query for relevant information of any game resource in the resource registry to obtain the identifier information of any game resource.

The second processing sub-module 522 is configured to, based on the identifier information of any one game resource, invoke a third preset interface of the resource manager and obtain any game resource by using the resource manager.

Furthermore, the second processing sub-module 522 includes a querying unit 5221 and a first result processing unit 5222 as shown in FIG. 6.

The querying unit 5221 is configured to query the game resources cached in the resource caching module of the resource manager, and determine whether any game resource is included in the cached game resources.

The first result processing unit 5222 is configured to, if any game resource is included, return any game resource; if no game resource is included, invoke a fourth preset interface of the resource loader by the resource manager, and load any game resource by the resource loader.

Furthermore, the first result processing unit 5222 is specifically configured to: determine whether the load queue module is loading any game resource; if any game resource is being loaded, register a corresponding callback function and return any loaded game resource by the callback function; if no game resource is being loaded, add a resource item for loading any game resource to the load queue module and based on the resource item, perform loading on any game resource.

Furthermore, the first result processing unit 5222 is specifically configured to: detect, by the cyclic reference detection module, whether a cyclic dependence is present in the resource item; if the cyclic dependence is present, perform breaking processing on the cyclic dependence and load any game resource; if no cyclic dependence is present, perform pipeline scheduling on the resource item by using the pipeline scheduling module, such that relevant data of any game resource flows into the scheduled pipeline, and based on the scheduled pipeline, load any game resource by using the load pipeline module.

Furthermore, the first result processing unit 5222 is specifically configured to: invoke the second preset interface by the resource identifier analyzing pipe to convert the identifier information of any game resource into the actual path of any game resource; invoke the second preset interface by the resource MD5 analyzing pipe to add the hash value of any game resource to the actual path to obtain the version path of any game resource; based on the version path, determine, by the platform adaption pipe, an API adapting to any operation platform; based on the API, in combination with the type of any game resource, determine a downloader for downloading any game resource by the resource download pipe, and download any game resource by using the downloader; based on the API, in combination with the type of any game resource, determine a loader for loading any game resource by the resource download pipe, and load any game resource by using the loader.

Furthermore, as shown in FIG. 6, the second processing sub-module 5222 further includes a second result processing unit 5223.

The second result processing unit 5223 is configured to: analyze, by the resource dependence analyzing module, a relevant resource relied on by any game resource, and based on a analysis result, determine whether a dependence is present in any game resource; if the dependence is present, cyclically perform the operations of the second processing sub-module; if no dependence is present, invoke the third preset interface of the resource manager, and determine a management policy of any game resource by using the resource policy module of the resource manager, and at the same time, cache any game resource by using the resource caching module of the resource manager such that any game resource is returned.

### Embodiment 3

An embodiment of the present disclosure provides an electronic device. As shown in FIG. 7, the electronic device 700 includes a processor 701 and a memory 703, where the processor 701 and the memory 703 are connected via a bus 702. Furthermore, the electronic device 700 may further include a transceiver 704. It is to be noted that the number of the transceivers 704 is not limited to 1 in practical applications. The structure of the electronic device 700 does not constitute any limitation to the embodiments of the present disclosure.

The processor 701 is applied to the embodiment of the present disclosure to achieve the functions of the receiving module, the obtaining module and the returning module shown in FIG. 5 or 6.

The processor 701 may be a central processing unit (CPU), a general processor, a digital signal processor (DSP), an application specific integrated circuit (ASIC), a field programmable gate array (FPGA) or other programmable logic devices, transistor logic devices, hardware components or any combination thereof. It can implement the logic blocks, modules and circuits of the embodiments described in combination with the contents of the present disclosure. The processor 701 may also be a combination for implementing computation function, for example, may be a combination including one or more microprocessors, or a combination of DSP and microprocessor or the like.

The bus 702 may include one passage for conveying information between the above components. The bus 702 may also be a PCI bus or EISA bus or the like. The bus 702 may include an address bus, a data bus, a control bus and the like. For ease of representation, it is represented by one thick line in FIG. 7, which does not mean there is only one bus or one type of buses.

The memory 703 may be a read only memory (ROM), or another type of static storage devices capable of storing static information and instructions, an random access memory (RAM), or another type of dynamic storage devices capable of storing information and instructions, and may also be Electrically Erasable Programmable read only memory (EEPROM), CD-ROM, or other compact disk storage or disk storage (including compression disk, laser disk, optical disk, digital universal disk, and blue ray disk and the like), magnetic disk storage medium, or other magnetic storage device, or any other medium capable of carrying or storing desired program codes in the form of instruction or data structure, which can be accessed by a computer, which is not limited herein.

The memory 703 is configured to store application program codes for performing the solution of the present disclosure under the control of the processor 701. The processor 701 is configured to execute the application program codes stored in the memory 703 to perform the actions of the game engine resource processing apparatus provided by the embodiment shown in FIG. 5 or 6.

An embodiment of the present disclosure provides an electronic device including a memory, a processor and a computer program stored in the memory and run on the processor. The program is executed by the processor to perform the method shown in the above embodiments as compared with the prior arts.

An embodiment of the present disclosure provides a computer readable storage medium storing a computer program which is executed by a processor to perform the method shown in the above embodiments.

The computer readable storage medium provided by the embodiment of the present disclosure is applicable to any embodiment of the above method and no redundant descriptions will be made herein.

It should be understood that although various steps in the flowchart of the accompanying drawings are displayed in a sequence as indicated by an arrow, these steps are not necessarily performed in the sequence indicated by the arrow. Unless otherwise clearly stated in the present disclosure, these steps are not limited to any strict sequence and may be performed in another sequence. Furthermore, at least part of the steps in the flowchart of the accompanying drawings may include a plurality of sub-steps or a plurality of stages. These sub-steps or stages are not necessarily completed at a same time but may be performed at different times. These sub-steps or stages are also not necessarily performed in sequence but may be performed in turns or alternately with at least part of other steps or the sub-steps or stages of other steps.

The above descriptions are made merely to some embodiments of the present disclosure. It should be pointed out that those skilled in the art may also make several improvements and modifications without departing from the principle of the present disclosure, and these improvements and modifications shall all fall within the scope of protection of the present disclosure.

## Claims

1. A game engine resource processing method, comprising:
receiving, by a first preset interface of a game engine, an obtaining request for any game resource of any operation platform;
obtaining, based on the obtaining request, the any game resource by using a resource management system of the game engine, wherein the resource management system comprises the first preset interface, resources, a resource manager, a resource loader and a resource registry;
returning obtained any game resource.

2. The method of claim 1, wherein the resource manager is configured to cache existing game resources, perform game resource release and based on a game resource type, determine a game resource release policy;
the resource loader is configured to load various game resources based on a piped load pipeline;
the resource registry is configured to store relevant information of the game resources, which comprises at least one of identifier information, a hash value, and conversion information from a resource path to an actual path.

3. The method of claim 1 or 2, wherein the resource loader comprises a load queue module, a cyclic reference detection module, a pipeline scheduling module, a load pipeline module, a resource dependence analyzing module and an error processing module;
the load queue module is configured to store each game resource item being loaded and/or a game resource item to be loaded;
the cyclic reference detection module is configured to detect whether a cyclic dependence is present in a dependence relationship between the game resources, and when the cyclic dependence is present, perform breaking processing on the cyclic dependence;
the pipeline scheduling module is configured to perform at least one of the followings: controlling splicing of each pipeline, controlling data inflow and data outflow between pipes, scheduling parallel processing of each pipe, and scheduling callback processing of each pipe;
the load pipeline module is configured to perform at least one of dynamic splicing, deletion, addition and shift of the pipelines;
the resource dependence analyzing module is configured to, after deserialization, analyze relevant resources relied on by the game sources and load the relevant resources obtained by analysis;
the error processing module is configured to record abnormal information in a loading process of the game resources and return the abnormal information.

4. The method of claim 3, wherein the load pipeline module comprises a resource identifier analyzing pipe, a resource MD5 analyzing pipe, a platform adaption pipe, a resource download pipe and a resource load pipe;
the resource identifier analyzing pipe is configured to convert the identifier information of the game resources into global unique identifier information of the game resources, and covert the global unique identifier information into an actual path of the game resources;
the resource MD5 analyzing pipe is configured to obtain a version path of the game resources by adding a hash value of the game resources to the actual path of the game resources;
the platform adaption pipe is configured to perform matching on corresponding application programming interfaces API based on different game operation platforms;
the resource download pipe is configured to, based on a type of the game resources, determine a corresponding downloader for downloading the game resources;
the resource load pipe is configured to, based on a type of the game resources, determine a corresponding loader for loading the game resources.

5. The method of claim 1 or 2, wherein the resource manager comprises a resource policy module, a resource obtaining module, a resource caching module and a resource releasing module;
wherein the resource policy module is configured to determine different management policies for different game resources;
the resource obtaining module is configured to determine whether a game resource is present by querying the resource caching module, and when a game resource is present, return the game resource, and when no game resource is present, perform loading for the game resource by using the resource loader;
the resource caching module is configured to cache all resources used in a game;
the resource releasing module is configured to, based on user selection, determine to perform releasing on the game resources or on the relevant resources relied on by the game resources.

6. The method of claim 1 or 2, wherein the resource registry comprises a resource path processing module, a resource information module, a resource identifier mapping table module and a resource MD5 mapping table module;
the resource path processing module is configured to convert the global unique identifier information of the game resources into path information of the game resources;
the resource information module is configured to store at least one of the followings: types of the game resources, relative paths of the game resources, names of the game resources, identifier information of the game resources, and an identifier for indicating whether a game resource is a sub-resource;
the resource identifier mapping table module is configured to perform mapping on the identifier information of the game resources and the global unique identifier information of the game resources;
the resource MD5 mapping table module is configured to perform mapping on the global unique identifier information of the game resources and the hash values of the game sources so as to query for the version information of the game sources.

7. The method of any one of claims 1 to 6, wherein obtaining any game resource by using the resource management system comprises:
at action *a*, invoking, by the first preset interface, a second preset interface of the resource registry, and querying for relevant information of any game resource in the resource registry to obtain the identifier information of any game resource;
at action *b*, invoking, based on the identifier information of any one game resource, a third preset interface of the resource manager and obtaining any game resource by using the resource manager.

8. The method of claim 7, wherein obtaining any game resource by using the resource manager comprises:
querying the game resources cached in the resource caching module of the resource manager and determining whether any game resource is comprised in the cached game resources;
if any game resource is comprised, returning any game resource;
if no game resource is comprised, invoking a fourth preset interface of the resource loader by the resource manager, and loading any game resource by the resource loader.

9. The method of claim 8, wherein loading any game resource by the resource loader comprises:
determining whether the load queue module is loading any game resource;
when any game resource is being loaded, registering a corresponding callback function and returning any loaded game resource by the callback function;
when no game resource is being loaded, adding a resource item for loading any game resource to the load queue module and based on the resource item, performing loading on any game resource.

10. The method of claim 9, wherein based on the resource item, performing loading on any game resource comprises:
detecting, by the cyclic reference detection module, whether a cyclic dependence is present in the resource item;
when the cyclic dependence is present, performing breaking processing on the cyclic dependence and loading any game resource;
when no cyclic dependence is present, performing pipeline scheduling on the resource item by using the pipeline scheduling module, such that relevant data of any game resource flows into the scheduled pipeline, and based on the scheduled pipeline, loading any game resource by using the load pipeline module.

11. The method of claim 10, wherein based on the scheduled pipeline, loading any game resource by using the load pipeline module comprises:
invoking the second preset interface by the resource identifier analyzing pipe and converting the identifier information of any game resource into the actual path of any game resource;
invoking the second preset interface by the resource MD5 analyzing pipe, adding the hash value of any game resource to the actual path, and obtaining the version path of any game resource;
based on the version path, determining, by the platform adaption pipe, an API adapting to any operation platform;
based on the API, in combination with the type of any game resource, determining a downloader for downloading any game resource by the resource download pipe, and downloading any game resource by using the downloader;
based on the API, in combination with the type of any game resource, determining a loader for loading any game resource by the resource download pipe, and loading any game resource by using the loader.

12. The method of claim 10, wherein after loading any game resource by using the load pipeline module based on the scheduled pipeline, the method further comprises:
analyzing, by the resource dependence analyzing module, a relevant resource relied on by any game resource, and based on an analysis result, determining whether a dependence is present in any game resource;
if the dependence is present, cyclically performing the action *b*;
if no dependence is present, invoking the third preset interface of the resource manager, and determining a management policy of any game resource by using the resource policy module of the resource manager, and at the same time, caching any game resource by using the resource caching module of the resource manager such that any game resource is returned.

13. A game engine resource processing apparatus, comprising:
a receiving module, configured to receive, through a first preset interface of a game engine, an obtaining request for any game resource of any operation platform;
an obtaining module, configured to, based on the obtaining request, obtain any game resource by using a resource management system of the game engine, wherein the resource management system comprises the first preset interface, resources, a resource manager, a resource loader and a resource registry;
a returning module, configure to return any obtained game resource.

14. An electronic device, comprising:
a processor; and
a memory, having a computer program stored therein that when executed by the processor, causing the processor to perform the game engine resource processing method of any one of claims 1 to 12.

15. A computer readable storage medium, storing a computer program, wherein the program is executed by a processor to perform the game engine resource processing method of any one of claims 1 to 12.
